# EUROPÄISCHE PATENTANMELDUNG

(11) **EP 1 764 479 A1**
(43) Veröffentlichungstag der Anmeldung: **21.03.2007**
(21) Anmeldenummer: 06119287.8
(22) Anmeldetag: 22.08.2006
(51) Int. Cl.: F01D 5/22, F01D 9/04, F01D 5/30

(54) **Gekoppelte Deckplatten für eine Schaufelreihe einer Strömungsmaschine**

(30) Priorität: 15.09.2005 CH 15102005
(71) Anmelder: Alstom Technology Ltd, 5400 Baden (CH)
(72) Erfinder: Ferber, Jörgen, 79793, Wutöschingen (DE); Ritchie, James, Ennetbaden 5408 (CH)

(57) **Zusammenfassung**

Die vorliegende Erfindung betrifft eine Strömungsmaschine (1), insbesondere Turbine oder Kompressor, umfassend einen Rotor (2), der zumindest eine Laufschaufelreihe (4) mit mehreren Laufschaufeln (5) aufweist, und einen Stator (3), der zumindest eine Leitschaufelreihe (6) mit mehreren Leitschaufeln (7) aufweist, wobei wenigstens bei einer der Schaufelreihen (4,6) alle Schaufeln (5,7) jeweils eine Deckplatte (10) aufweisen.

Um die Wartung der Strömungsmaschine (1) zu vereinfachen, sind die Deckplatten (10) bezüglich der jeweiligen Schaufel (5,7) separate Bauteile und an die jeweilige Schaufel (5,7) angebaut, wobei in Umfangsrichtung (9) benachbarte Deckplatten (10) miteinander zur Übertragung von Zugkräften in Umfangsrichtung (9) gekoppelt sind.
Dabei sind die Deckplatten (10) an der zugehörigen Schaufel (5,7) radial beweglich und zerstörungsfrei lösbar angebaut.

## Beschreibung

### Technisches Gebiet

Die vorliegende Erfindung betrifft eine Strömungsmaschine, insbesondere eine Turbine oder einen Kompressor, mit den Merkmalen des Oberbegriffs des Anspruchs 1. Die Erfindung betrifft außerdem eine Deckplatte für Schaufeln einer derartigen Strömungsmaschine.

### Stand der Technik

Strömungsmaschinen, wie Turbinen, insbesondere Gasturbinen und Dampfturbinen, sowie Kompressoren, umfassen einen Rotor, der in einem ortsfesten Stator drehbar gelagert ist. Derartige Strömungsmaschinen werden auch als rotierende Strömungsmaschinen bezeichnet. Der Rotor umfasst dabei regelmäßig mehrere Laufschaufelreihen, die jeweils aus mehreren Laufschaufeln bestehen. Dementsprechend weist der Stator üblicherweise mehrere Leitschaufelreihen auf, die jeweils aus mehreren Leitschaufeln bestehen.

Dabei ist es grundsätzlich bekannt, die Laufschaufelreihen und/oder die Leitschaufelreihen mit einem Deckband zu versehen, das aus mehreren, jeweils an einer der Schaufeln ausgebildeten Deckbandabschnitten oder Deckplatten besteht. Das so gebildete, mehrgliedrige Deckband besitzt im montierten Zustand eine ringförmige Anordnung. Innerhalb des Deckbands stützen sich die freien Schaufelenden benachbarter Schaufeln innerhalb derselben Schaufelreihe über die Deckplatten aneinander ab. Mit Hilfe derartiger Deckbänder kann die axiale Abdichtung und die Aerodynamik der jeweiligen Schaufelreihe verbessert werden, was den Wirkungsgrad der damit ausgestatteten Strömungsmaschine erhöht. Darüber hinaus führen derartige Deckbänder zu einer Stabilisierung über eine Kopplung in Form einer gegenseitigen umfangsmäßigen Abstützung großer Schaufeln, die aufgrund ihrer radialen Länge im Betrieb der Strömungsmaschine eine gewisse Schwingungsneigung aufzeigen.

Aus der US 6,616,408 B1 ist ein Verfahren zum Herstellen einer Schaufel bekannt, bei dem die jeweilige Schaufel mittels eines hochfrequenten Induktionsschweißvorgangs aus mehreren Einzelteilen zusammengebaut wird. An ein das Schaufelprofil aufweisende Mittelteil werden ein einen Schaufelfuß aufweisendes erstes Endteil und ein eine Deckplatte aufweisendes zweites Endteil angeschweißt.

Die EP 0 285 778 B1 zeigt eine Schaufel, die an ihrem Kopf eine Deckplatte, also einen der Schaufel zugeordneten Deckbandabschnitt aufweist. Dabei ist die Deckplatte an den Schaufelkopf angegossen, um eine Schaufel mit integrierter Deckplatte zu erhalten. Zwecks besserer mechanischer Verankerung zwischen angegossener Deckplatte und Schaufel kann der Schaufelkopf in dem zu umgießenden Bereich eine Hinterschnittkontur aufweisen, die beim Gießen der Deckplatte ausgegossen wird.

Aus der US 4,538,331 und aus der US 4,592,120 ist es jeweils bekannt, einen eine Laufschaufelreihe integral aufweisenden Rotorabschnitt dadurch herzustellen, dass der Rotorabschnitt in eine mit den Laufschaufeln bestückte Gießform gegossen wird. Die Laufschaufeln sind hierzu mit einem schwalbenschwanzartigen Fuß ausgestattet, der in den auszugießenden Hohlraum der Gießform hineinragt und beim Gießen des Rotorabschnitts in den Gusswerkstoff eingebettet wird. Hierbei kommt es zu einer Fusionsverbindung zwischen dem Rotorabschnitt und der jeweiligen Laufschaufel.

Aus der US 5,113,583 ist ein weiteres Verfahren zum Herstellen eines integral mit Laufschaufeln ausgestatteten Rotorabschnitts bekannt, bei dem verformbare, hohle Einkristall-Schaufeln bis auf einen Fußabschnitt in einer keramischen Schutzhülle angeordnet sind, während im Rahmen eines isostatischen Schmiedevorgangs der Rotorabschnitt mit den Fußabschnitten der Laufschaufeln durch einen bei hohen Temperaturen und hohen Drücken stattfindenden Diffusionsbindungsprozess verbunden wird.

Aus der US 5,904,201 ist ein Verfahren zum integralen Anformen einer Verlängerung an einem Bauteil, wie z.B. eine Turbinenschaufel, bekannt. Beispielsweise kann zur Reparatur einer Schaufelspitze die Schaufel mit ihrer Spitze voran von oben in eine Schmelze eingetaucht werden, die vorzugsweise aus dem Legierungswerkstoff der Schaufel besteht. Im Bereich des in die Schmelze eingetauchten Schaufelendes bildet sich eine Wachstumszone aus, in welcher der Übergang zwischen der Flüssigphase der Schmelze und der Festphase der Schaufel stattfindet. Durch langsames Herausziehen der Schaufel aus der Schmelze nach oben wächst die Schaufel durch den fortlaufend stattfindenden Phasenübergang in der Wachstumszone. Zur Ausbildung einer speziellen Geometrie können Keramikformen verwendet werden, die im Bereich der Wachstumszone angeordnet sind.

Ein weiteres Verfahren zum Herstellen einer integralen Verlängerung an einem Bauteil, vorzugsweise an einer Turbinenschaufel, ist aus der US 5,473,322 bekannt. Dort wird beispielsweise zur Reparatur einer Schaufelspitze, eine keramische Form im Bereich der Schaufelspitze an der Schaufel angebracht, derart, dass die zu verlängernde Schaufelspitze die Form nach unten abschließt, während die Form nach oben offen ist. Die Form wird dann mit einer Schmelze, vorzugsweise aus dem Legierungsmaterial der Schaufel, befüllt und hierdurch kann sich im Bereich der Schaufelspitze wieder eine Wachstumszone ausbilden, in welcher ein Phasenübergang stattfindet. Durch langsames Absenken der Schaufel bzw. durch langsames Anheben der Form kann das gewünschte Wachstum der Schaufel erreicht werden.

Aus der US 6,325,871 B1 ist ein Verfahren zum Verbinden von zwei Bauteilen aus Superlegierung bekannt. Bei den Bauteilen kann es sich um zwei Hälfen einer Gasturbinenschaufel handeln, die vorzugsweise als Einkristalle hergestellt sind.

Aus der US 6,219,916 B1 ist ein Verfahren zum Herstellen eines Rotorabschnitts mit integralen Laufschaufeln bekannt. Zum Befestigen der einzelnen Laufschaufeln wird der Rotorabschnitt mit einer linearen Nut und die Laufschaufel mit einem komplementär zur Nut geformten Fuß versehen. Durch lineares Reibschweißen kann dann die Laufschaufel mit dem Rotorabschnitt verbunden werden.

Sofern die Deckbänder als Axialdichtungen für einzelne Schaufelreihen verwendet werden, können sie einem erhöhten Verschleiß ausgesetzt sein, wodurch Reparaturen erforderlich sind. Da die einzelnen Deckplatten oder Deckbandabschnitte, die im montierten Zustand in ihrer Gesamtheit das jeweilige Deckband bilden, einen integralen Bestandteil der zugehörigen Schaufel bilden, kommt es zu hohen Reparaturkosten, da die gesamte Schaufel repariert und ggf. ausgetauscht werden muss.

Des Weiteren sind die einzelnen Deckbandabschnitte bzw. Deckplatten bei Laufschaufeln extremen Zentrifugalkräften ausgesetzt. Laufschaufeln, die integral die Deckenplatte aufweisen, stehen unter einer entsprechend hohen Zugbelastung, wodurch die Standzeit der einzelnen Laufschaufel reduziert wird. In der Folge müssen die Laufschaufeln früher ausgetauscht werden.

### Darstellung der Erfindung

Hier will die Erfindung Abhilfe schaffen. Die Erfindung, wie sie in den Ansprüchen gekennzeichnet ist, beschäftigt sich mit dem Problem, für eine Strömungsmaschine der eingangs genannten Art eine verbesserte Ausführungsform anzugeben, die sich insbesondere durch reduzierte Betriebskosten bzw. Wartungskosten auszeichnet.

Dieses Problem wird durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die das Deckband bildenden Deckplatten miteinander so zu koppeln, dass sie in Umfangsrichtung Zugkräfte zwischen einander übertragen können. Bei entsprechender Anordnung an den jeweiligen Schaufeln lässt sich dadurch zumindest bei Laufschaufeln im Betrieb der Strömungsmaschine eine selbsttragende Struktur für das Deckband erzielen. Das so gebildete selbsttragende Deckband kann die im Betrieb auftretenden Kräfte, insbesondere bei einer Laufschaufelreihe, in sich aufnehmen, ohne dabei die Schaufeln zu belasten. Erreicht wird dies durch die in Umfangsrichtung geschlossen umlaufende Zugkraftkopplung benachbarter Deckplatten aneinander, wodurch die auftretenden Zentrifugalkräfte in tangentiale Zugspannungen umgewandelt werden. Um die Deckplatten an die Schaufeln anbauen zu können, muss es sich bei den Deckplatten um bezüglich der Schaufeln separat hergestellte Bauteile handeln. Die separate Herstellung der Deckplatten ermöglicht die Verwendung eines Werkstoffs, der sich von demjenigen der Schaufeln unterscheidet, und/oder einer Werkstoffstruktur, die sich von derjenigen der Schaufeln unterscheidet. Beispielsweise können die Deckplatten in Richtung einer Zugbelastung in Umfangsrichtung optimiert sein, während die Schaufeln üblicherweise im Hinblick auf eine Zugbelastung in radialer Richtung optimiert sind.

Der durch die Erfindung bereitgestellt mehrgliedrige, selbsttragende Deckbandring hat bei seiner Verwendung bei einer Laufschaufelreihe den Vorteil, dass er die im Betrieb auftretenden Zentrifugalkräfte in sich aufnehmen kann, ohne dass dabei eine signifikante zusätzliche radiale Zugbelastung der Laufschaufeln auftritt. Die Lebensdauer der Laufschaufeln wird dadurch erhöht. Ebenso können die Laufschaufeln schwächer dimensioniert werden, was zu einer den Wirkungsgrad der Strömungsmaschine steigernden Gewichtsreduzierung nutzbar ist.

Darüber hinaus lassen sich die als separate Bauteile ausgestalteten Deckplatten ohne weiteres so ausbilden, dass sie vergleichsweise einfach wieder ausgebaut werden können. Hierdurch vereinfacht sich die Reparatur bzw. der Ersatz der Deckplatten im Falle von Verschleißerscheinungen. Dies ist insbesondere bei Rotorabschnitten mit integrierten Laufschaufeln von Vorteil.

Ein weiterer Vorteil wird darin gesehen, dass diese Deckplatten grundsätzlich nachrüstbar ist. Auf diese Weise können Schaufelreihen einer Strömungsmaschine nachträglich auf vergleichsweise kostengünstige Weise mit einem Deckband versehen werden, um dadurch die Vorteile eines Deckbands, nämlich Stabilisierung über Kopplung langer Schaufeln und Wirkungsgradsteigerung durch reduzierte Leckagen und verbesserte Aerodynamik, nutzen zu können.

Bei einer bevorzugten Ausführungsform können die Deckplatten so an den jeweiligen Schaufeln angebaut sein, dass sie bezüglich der Schaufeln radial frei beweglich sind. Das heißt, dass die Deckplatten an den Schaufeln in radialer Richtung nicht fixiert sind, sondern relativ dazu, vorzugsweise innerhalb definierter Grenzen, frei beweglich oder lose angeordnet sind. Auf diese Weise lassen sich beispielsweise auch thermisch bedingte Spannungen reduzieren. Von besonderem Vorteil ist diese Bauweise beim Einsatz der Deckplatten bei einer Laufschaufelreihe. Die im Betrieb auftretenden Zentrifugalkräfte zwingen die Deckplatten radial nach außen. Durch den bereitgestellten Freiheitsgrad in radialer Richtung können die Deckplatten von den zugehörigen Laufschaufeln grundsätzlich in radialer Richtung abheben, ohne dass dabei Zugkräfte zwischen den Deckplatten und den Laufschaufeln übertragen werden. Hinsichtlich der Zentrifugalkräfte sind die Laufschaufeln somit von den Deckplatten entkoppelt.

Weitere wichtige Merkmale und Vorteile der erfindungsgemäßen Strömungsmaschine ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch,
- Fig. 1: ein stark vereinfachter, prinzipieller Querschnitt durch eine Strömungsmaschine im Bereich einer Schaufelreihe,
- Fig. 2: eine Ansicht wie in Fig.1, jedoch bei einer anderen Schnittebene oder Ausführungsform,
- Fig. 3: eine Ansicht in radialer Richtung im Bereich einer Schaufel entsprechend einem Pfeil III in Fig. 1 bzw. in Fig. 2,
- Fig. 4: einen Längsschnitt durch die Schaufel im Bereich einer Deckplatte entsprechend Schnittlinien IV in Fig. 3,
- Fig. 5: eine Ansicht wie in Fig. 4, jedoch bei einer anderen Schnittebene entsprechend Schnittlinien V in Fig. 3,
- Fig. 6 bis 10: axiale Ansichten auf einen Kontaktbereich benachbarter Deckplatten bei verschiedenen Ausführungsformen.

### Wege zur Ausführung der Erfindung

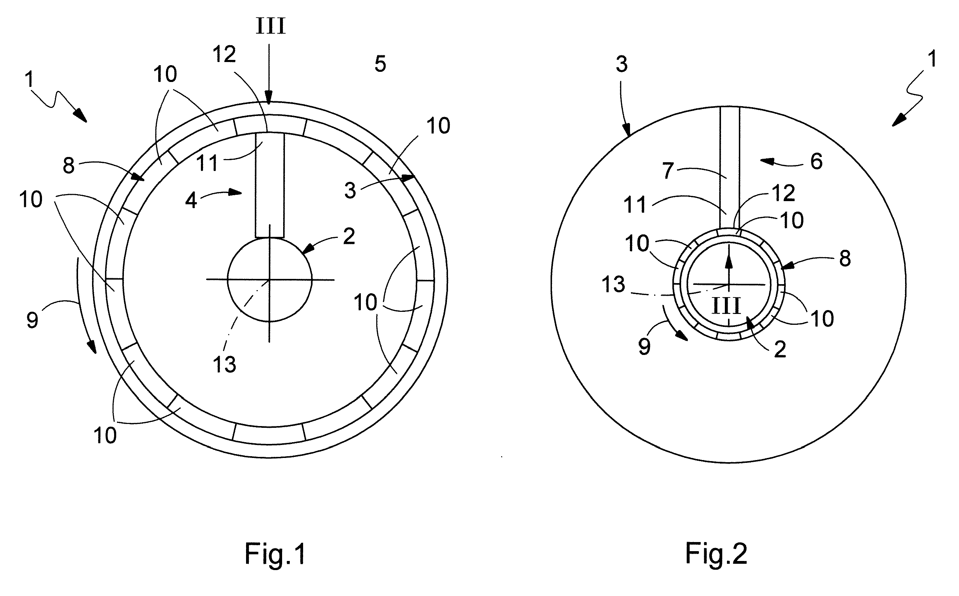

Entsprechend den Fig. 1 und 2 ist eine Strömungsmaschine 1 mit einem Rotor 2 und mit einem Stator 3 ausgestattet. Der Rotor 2 ist in üblicher Weise im Stator 3 drehbar gelagert. Bei der Strömungsmaschine 1 kann es sich grundsätzlich um einen Kompressor oder um eine Turbine handeln. Im Falle einer Turbine kann es sich um eine Dampfturbine oder Gasturbine handeln. Die Strömungsmaschine 1 kann stationär sein und beispielsweise in einer Kraftwerksanlage zum Antreiben eines Generators dienen. Ebenso kann es sich bei der Strömungsmaschine 1 um ein Antriebsaggregat in einem Fahrzeug, insbesondere in einem Luftfahrzeug handeln. Bevorzugt wird jedoch eine Realisierung der Erfindung bei einer Ausgestaltung der Strömungsmaschine 1 als stationäre Gasturbine.

Der Rotor 2 weist entsprechend Fig. 1 zumindest eine Laufschaufelreihe 4 auf, die aus mehreren Laufschaufeln 5 besteht. Der Querschnitt gemäß Fig. 1 liegt im Bereich einer solchen Laufschaufelreihe 4, wobei allerdings zur Veranschaulichung nur eine einzige Laufschaufel 5 dargestellt ist. Im Unterschied dazu weist der Stator 3 gemäß Fig. 2 wenigstens eine Leitschaufelreihe 6 auf, die aus mehreren Leitschaufeln 7 besteht. Der Schnitt gemäß Fig. 2 geht dabei durch eine solche Leitschaufelreihe 6, wobei zur Veranschaulichung nur eine einzige Leitschaufel 7 wiedergegeben ist.

Die Strömungsmaschine 1 ist zumindest mit einem Deckband 8 ausgestattet, das sich in der durch einen Pfeil 9 angedeuteten Umfangsrichtung geschlossen erstreckt und einer der Schaufelreihen 4, 6 zugeordnet ist. Dabei ist dieses Deckband 8 aus mehreren, in der Umfangsrichtung 9 benachbarten einzelnen Deckbandabschnitten oder Deckplatten 10 gebildet, die jeweils am Kopf 11 der zugehörigen Schaufel 5, 7 angeordnet sind. Jede Schaufel 5, 7 trägt eine solche Deckplatte 10. Bei der in Fig. 1 gezeigten Ausführungsform ist das Deckband 8 der Laufschaufelreihe 4 zugeordnet, wodurch die Deckplatten 10 an den vom Rotor 2 entfernten äußeren Enden der Laufschaufeln 5 angeordnet sind. Im Unterschied dazu ist bei der Ausführungsform gemäß Fig. 2 das Deckband 8 der Leitschaufelreihe 6 zugeordnet, und die Deckplatten 10 sind dementsprechend an den dem Rotor 2 zugewandten radial innenliegenden Enden der Leitschaufeln 7 angeordnet.

Die jeweilige Deckplatte 10 ist vorzugsweise aus einem Stück hergestellt, z.B. durch Gießen oder Schmieden. Die Deckplatte 10 bildet erfindungsgemäß ein separates Bauteil, das unabhängig von der jeweiligen Schaufel 5, 7 hergestellt ist und zur Montage an die Schaufel 5, 7 angebaut wird. Hierzu sind die Deckplatten 10 und die Schaufeln 5, 7 mittels Halterungen 12 aneinander angeordnet. Dabei ist jede Deckplatte 10 jeweils für sich an der zugehörigen Schaufel 5, 7 mit einer solchen Halterung 12 angebracht.

Diese Halterungen 12 sind dabei so ausgestaltet, dass sie in radialer Richtung Relativbewegungen zwischen der Deckplatte 10 und der Schaufel 5, 7 ermöglichen. Außerdem sind die Halterungen 12 vorzugsweise so ausgestaltet, dass sie zerstörungsfrei lösbar sind. Mit anderen Worten, die montierten Deckplatten 10 können ohne Zerstörung der Deckplatten 10 und ohne Zerstörung der Schaufeln 5, 7 demontiert werden. Dies ist für die spätere Montage reparierter oder neuer Deckplatten 10 von entscheidendem Kostenvorteil.

Die Halterungen 12 lassen sich auch so ausgestalten, dass die Deckplatten 10 im montierten Zustand bezüglich der Schaufeln 5, 7 jeweils in der Umfangsrichtung 9 und/oder in axialer Richtung, also parallel zur Rotationsachse 13 des Rotors 2 fixiert sind. Hierdurch wird quer zur Radialrichtung eine definierte Lagefixierung für die Deckplatten 10 relativ zu den zugehörigen Schaufeln 5, 7 erreicht.

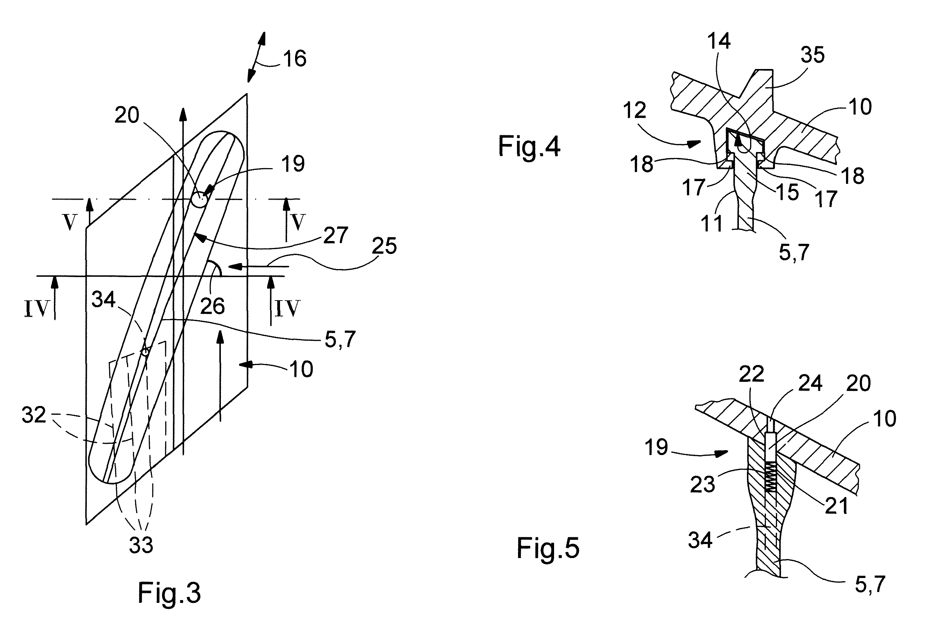

Entsprechend den Fig. 3 und 4 kann eine derartige Halterung 12 beispielsweise eine an der Deckplatte 10 ausgebildete Aufnahme 14 aufweisen, in welche ein an der jeweiligen Schaufel 5, 7 ausgebildetes Halteglied 15 eingesetzt ist. Die Aufnahme 14 hat dabei die Form einer einseitig offenen Längsnut, die sich in einer in Fig. 3 durch einen Doppelpfeil angedeuteten Montagerichtung 16 erstreckt. Die Aufnahme 14 weist an ihrer offenen Seite zwei nach innen vorstehende Randabschnitte 17 auf, die bezüglich der Radialrichtung einen Hinterschnitt ausbilden. Das Halteglied 15 ist komplementär zur Aufnahme 14 geformt und besitzt korrespondierend zu den Randabschnitten 17 seitlich vorstehende Stufen 18. Durch radiales Spiel zwischen den Randabschnitten 17 und den Stufen 18 ist das Halteelement 15 relativ zur Aufnahme 14 in radialer Richtung beweglich gehalten. Quer zur Montagerichtung 16 und quer zur Radialrichtung ist das Halteglied 15 in der Aufnahme 14 fixiert, während in der Montagerichtung 16 grundsätzlich eine Relativverstellung zwischen Halteglied 15 und Aufnahme 14 möglich ist. Das Halteglied 15 ist hier durch einen integralen Bestandteil der Schaufel 5, 7 gebildet. Vorzugsweise ist der Schaufelkopf 11 als Halteglied 15 ausgeformt.

Die Halterung 12 ist bezüglich der Montagerichtung 16 als Schiebesitz oder Schiebelagerung ausgestaltet, die es ermöglicht, die Deckplatte 10 besonders einfach an der zugehörigen Schaufel 5, 7 zu montieren und von dieser zerstörungsfrei wieder zu demontieren.

Entsprechend Fig. 5 kann jede mit der Deckplatte 10 versehene Schaufel 5, 7 zumindest eine Sicherungseinrichtung 19 aufweisen, welche die Relativlage zwischen der jeweiligen Deckplatte 10 und der zugehörigen Schaufel 5, 7 quer zur Radialrichtung und somit insbesondere in der Montagerichtung 16 sichert. Die Sicherungseinrichtung 19 ist dabei radial zwischen der Deckplatte 10 und der jeweiligen Schaufel 5, 7, quasi innerhalb der Halterung 12 ausgebildet.

Die Sicherungseinrichtung 19 umfasst ein Sicherungsglied 20. Dieses ist an der Schaufel 5, 7 bzw. an deren Schaufelkopf 11 quer zur Montagerichtung 16, hier in Radialrichtung beweglich angeordnet. Hierzu enthält die Schaufel 5, 7 eine komplementär zum Sicherungsglied 20 geformte Führungsöffnung 21. Außerdem enthält die Deckplatte 10 eine Sicherungsöffnung 22, die fluchtend zur Führungsöffnung 21 angeordnet ist. Das Sicherungsglied 20, das beispielsweise ein zylindrischer Bolzen ist, ist auf die Führungsöffnung 21 und auf die Sicherungsöffnung 22 so abgestimmt, dass das Sicherungsglied 20 in die Sicherungsöffnung 22 eindringen kann, sobald die fluchtende Ausrichtung zwischen Führungsöffnung 21 und Sicherungsöffnung 22 vorliegt. Führungsöffnung 21 und Sicherungsöffnung 22 sind komplementär zum Sicherungsglied 20 geformt, also beispielsweise zylindrisch. Die gewünschte Lagefixierung wird erreicht, sobald das Sicherungsglied 20 zum Teil in die Sicherungsöffnung 22 und zum Teil in die Führungsöffnung 21 hineinragt, wodurch ein Formschluss erreicht wird.

Die Sicherungseinrichtung 19 kann eine, z.B. in der Führungsöffnung 21 angeordnete, Sicherungsfeder 23 aufweisen, die das Sicherungsglied 20 in die Sicherungsposition vorspannt. Die Sicherungsöffnung 22 enthält vorzugsweise einen nicht näher bezeichneten Anschlag, der die Eindringtiefe für das Sicherungsglied 20 begrenzt. Desweiteren umfasst die Sicherungseinrichtung 19 hier eine Entsicherungsöffnung 24, die in der Deckplatte 10 ausgebildet und zweckmäßig koaxial zur Sicherungsöffnung 22 angeordnet ist. Mit einem geeigneten Werkzeug kann nun durch die Entsicherungsöffnung 24 hindurch das Sicherungsglied 20 aus der Sicherungsöffnung 22 aus- und in die Führungsöffnung 21 eingetrieben werden.

Entsprechend Fig. 3 ist die Halterung 12 zweckmäßig so ausgestaltet, dass ihre Aufnahme 14 gegenüber der axialen Richtung, repräsentiert durch einen Pfeil 25, eine Neigung aufweist. Dementsprechend erstreckt sich die Längsrichtung der Aufnahme 14 geneigt gegenüber der Axialrichtung 25. Dabei ist ein Neigungswinkel mit 26 bezeichnet. Durch die geneigte Orientierung der Aufnahme 14 kann die Halterung 12 zusätzlich Umfangskräfte und Axialkräfte zwischen der Deckplatte 10 und der jeweiligen Schaufel 5, 7 übertragen.

Durch die integrale Ausbildung des Halteglieds 15 und des Schaufelkopfs 11 neigt sich die Längsrichtung der Aufnahme 14 etwa in der gleichen Weise wie ein Profil 27 der Schaufel 5, 7. Der Neigungswinkel 26 entspricht dann etwa einem nicht näher bezeichneten Anstellwinkel des Schaufelprofils 27. Bei dieser Ausführungsform ergibt sich für die Halterung 12 in ihrer Montagerichtung 16, also parallel zur Längsrichtung der Aufnahme 14 eine besonders große Länge, was für die Montage vorteilhaft sein kann. Gleichzeitig lässt sich die Halterung 12 dadurch weitgehend in die Außenkontur der Schaufel 5, 7 integrieren. Ihr Schaufelkopf 11 muss demnach nur vergleichsweise geringfügig durch einen aufgedickten Querschnitt vergrößert werden, um das Halteglied 15 zu bilden. Die Halterung 12 baut somit vergleichsweise schlank.

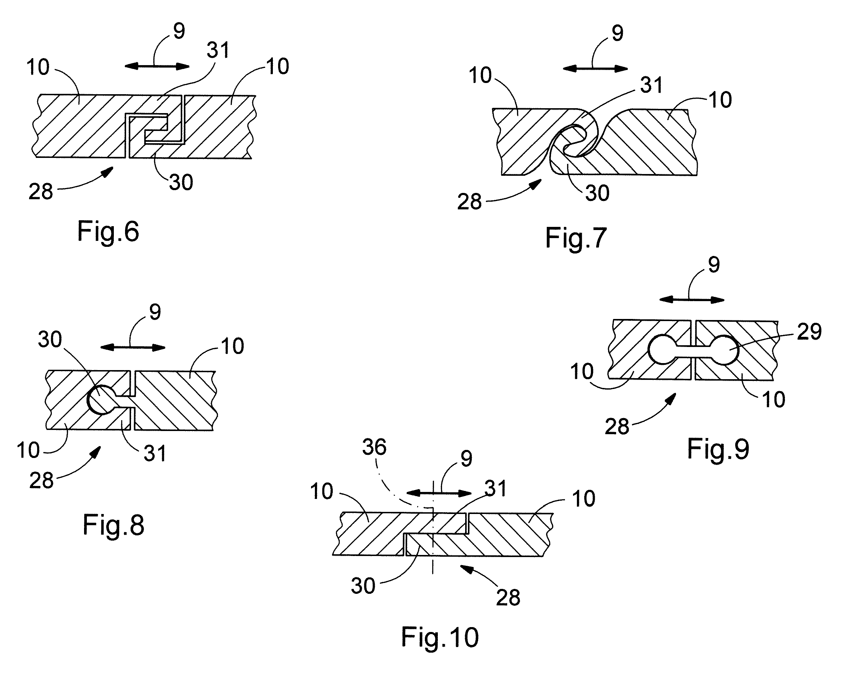

Erfindungsgemäß sind die innerhalb der jeweiligen Schaufelreihe 4, 6 in Umfangsrichtung 9 benachbarten Deckplatten 10 miteinander so gekoppelt, dass sie Zugkräfte zwischen einander in Umfangsrichtung 9 übertragen können. Hierzu ist dort, wo zwei benachbarte Deckplatten 10 in Umfangsrichtung 9 aneinandergrenzen, ein Kopplungsbereich 28 ausgebildet, der die Übertragung von Umfangskräften zwischen den benachbarten Deckplatten 10 ermöglicht. In diesem Kopplungsbereich 28 stehen die jeweils benachbarten Deckplatten 10 in der Umfangsrichtung 9 formschlüssig miteinander in Eingriff. Dabei kann dieser formschlüssige Eingriff wie bei den Ausführungsformen der Fig. 6 bis 8 direkt zwischen den beiden benachbarten Deckplatten 10 erfolgen oder wie bei der Ausführungsform gemäß Fig. 9 indirekt über ein zusätzliches Koppelglied 29.

Bei den Ausführungsformen der Fig. 6 bis 8 mit direktem Formschlusseingriff zwischen den benachbarten Deckplatten 10 weist jede Deckplatte 10 in Umfangsrichtung 9 an ihrem einen Ende eine erste Haltekontur 30 und an ihrem umfangsmäßig anderen Ende eine zweite Haltekontor 31 auf. Diese Haltekonturen 30, 31 sind zueinander komplementär ausgestaltet, derart, dass sie zur Übertragung von Zugkräften in der Umfangsrichtung 9 miteinander in Eingriff gebracht werden können, um einen Formschluss in Umfangsrichtung 9 zu erzeugen. Für die konkrete Ausgestaltung dieser Haltekonturen 30, 31 gibt es grundsätzlich beliebige Variationsmöglichkeiten, so dass hier lediglich einige Ausführungsbeispiele angedeutet sind, ohne jedoch diesbezüglich die Allgemeinheit der vorliegenden Erfindung zu beschränken. Bei den Fig. 6 und 7 sind die Haltekonturen 30, 31 im Profil U-förmig gestaltet, während bei der Ausführungsform gemäß Fig. 8 die erste Haltekontur 30 als Keder ausgestaltet ist, während die zweite Haltekontur 31 eine Kederaufnahme bildet.

Bei der Ausführungsform gemäß Fig. 9 wird die Zugkraftübertragung mit Hilfe des Koppelglieds 29 erreicht, das ein zusätzliches, separates Bauteil darstellt. Beispielhaft ist dieses Koppelglied 29 hier als Doppelkeder ausgestaltet, der komplementär zu den beiden jeweils als Kederaufnahme ausgestalteten Haltekonturen 30, 31 geformt ist.

Entsprechend Fig. 10 ist es grundsätzlich auch möglich, benachbarte Deckplatten 10 im Kopplungsbereich 28, also im Bereich der aneinander angrenzenden umfangsmäßigen Enden aneinander zu befestigen. Eine entsprechende Befestigung ist hier lediglich durch eine strichpunktierte Linie angedeutet und mit 36 bezeichnet und kann beispielsweise als Nietverbindung oder als Schraubverbindung ausgeführt sein. Die jeweilige Befestigung 36 ist hier exemplarisch radial orientiert und ist vorzugsweise so ausgelegt, dass die Zugkraftübertragung in Umfangsrichtung 9 durch Kraftschluss erfolgt, also durch die Haftreibung aufgrund der mit Hilfe der Befestigung 36 gegeneinander verspannten Haltekonturen 30, 31.

Die einzelnen Deckplatten 10 sind somit einerseits an ihrer zugehörigen Schaufel 5, 7 in radialer Richtung beweglich gehaltert, während sie andererseits mit den benachbarten Deckplatten 10 einen in Umfangsrichtung 9 zugsteifen Verbund bilden. Sofern die Deckplatten 10 an Laufschaufeln 5 einer Laufschaufelreihe 4 angebracht sind, ergibt sich durch die genannten Maßnahmen folgender Effekt: Sobald durch die Rotation des Rotors 2 die Zentrifugalkräfte wirksam werden, beginnen diese die einzelnen Deckplatten 10 radial nach außen anzutreiben. Da die einzelnen Deckplatten 10 an den zugehörigen Laufschaufeln 5 radial beweglich gehaltert sind, können die Deckplatten 10 von ihren Laufschaufeln 5 grundsätzlich radial abheben. Hierdurch nimmt jedoch der Durchmesser des Deckbands 8, das aus dem Verband der in Umfangsrichtung miteinander gekoppelten Deckplatten 10 gebildet ist, zu. Dieser Durchmesserzunahme wirken jedoch die zugsteifen Kopplungen innerhalb des Deckplattenverbands entgegen. In der Folge kommt es zu einer umfangsmäßigen Verspannung der miteinander gekoppelten Deckplatten 10, wodurch ein selbsttragender, ringförmig geschlossener Deckbandring ausbildet wird. Dieser Deckbandring besteht aus den einzelnen Deckplatten 10 und ist insoweit mehrgliedrig. Diese bei Rotation selbsttragende Struktur des Deckplattenverbands wandelt die an den Deckplatten 10 angreifenden Zentrifugalkräfte in Umfangskräfte um und kann diese in sich selbst abtragen. Somit sind die einzelnen Laufschaufeln 5 von den an den Deckplatten 10 angreifenden Zentrifugalkräften entlastet bzw. hinsichtlich einer Zentrifugalkraftübertragung von den Deckplatten 10 entkoppelt.

Entsprechend den Fig. 3 und 5 kann die jeweilige Deckplatte 10 bei speziellen Ausführungsformen zusätzlich Kühlkanalstrukturen 32 enthalten, die hier nur schematisch mit unterbrochenen Linien angedeutet sind. Diese Kühlkanalstrukturen 32 dienen zum Kühlen der Deckplatte 10 und können beispielsweise einen im Inneren der Deckplatte 10 verbleibenden Kühlmittelpfad ausbilden und/oder an der Oberfläche der Deckplatte 10 endende Austrittsöffnungen 33 aufweisen, durch die Kühlmittel, auch zur Ausbildung eines Kühlfilms an der Oberfläche der Deckplatte 10 austreten kann. Im montierten Zustand kommunizieren die Kühlkanalstrukturen 32 der Deckplatte 10 mit Kühlkanalstrukturen 34, die im Inneren der jeweiligen Schaufel 5, 7 ausgebildet sind. Auf diese Weise werden die Kühlkanalstrukturen 32 der Deckplatte 10 über die Kühlkanalstrukturen 34 der Schaufel 5, 7 mit Kühlmittel versorgt. Dabei kommt die von den Schaufeln 5, 7 unabhängige, separate Bauweise der Deckplatte 10 der Ausbildung komplexer Kühlkanalstrukturen 32 in der Deckplatte 10 zugute, da sich diese vor der Montage an den Schaufeln 5, 7 in der Deckplatte 10 herstellen lassen. Es ist klar, dass zur fluidischen Kopplung der deckbandseitigen Kühlkanalstrukturen 32 mit den schaufelseitigen Kühlkanalstrukturen 34 geeignete, hier nicht gezeigte Dichtmittel vorgesehen sein können.

Entsprechend Fig. 4 kann die Deckplatte 10 bei einer Weiterbildung der Erfindung mit einer Dichtungsstruktur 35 ausgestattet sein. Diese ist dabei an einer von den Schaufeln 5, 7 abgewandten Seite der Deckplatte 10 angeordnet. Die Dichtungsstruktur 35 ist hier ebenfalls nur angedeutet und weist exemplarisch die Form eines radial abstehenden und sich in Umfangsrichtung 9 erstreckenden Stegs auf, sogenannte Finne. Die Dichtungsstruktur 35 wirkt im Betrieb der Strömungsmaschine 1 mit einer radial benachbarten Wand entweder des Rotors 2 oder des Stators 3 zur Ausbildung einer Axialdichtung der jeweiligen Schaufelreihe 4, 6 zusammen. Beispielsweise taucht der in Fig. 4 angedeutete Steg in eine entsprechende Ringnut ein, um dadurch die Wirkung einer Labyrinthdichtung zu erzeugen. Für die Ausgestaltung derartiger Dichtungsstrukturen 35 gibt es im Stand der Technik viele Vorbilder, so dass hier nicht näher darauf eingegangen werden muss. Andere Dichtungsstrukturen 35 sind beispielsweise eine Schleifstruktur, die mit einer schleifbaren Gegenstruktur zusammenwirkt, wobei eine dieser Strukturen die Dichtungsstruktur 35 der Deckplatte 10 bildet, während die andere Struktur dann am Rotor 2 oder am Stator 3 ausgebildet ist.

### Bezugszeichenliste

- 1: Strömungsmaschine
- 2: Rotor
- 3: Stator
- 4: Laufschaufelreihe
- 5: Laufschaufel
- 6: Leitschaufelreihe
- 7: Leitschaufel
- 8: Deckband
- 9: Umfangsrichtung
- 10: Deckplatte
- 11: Schaufelkopf
- 12: Halterung
- 13: Rotationsachse
- 14: Aufnahme
- 15: Halteglied
- 16: Montagerichtung
- 17: Randbereich
- 18: Stufe
- 19: Sicherungseinrichtung
- 20: Sicherungsglied
- 21: Führungsöffnung
- 22: Sicherungsöffnung
- 23: Sicherungsfeder

- 24: Entsicherungsöffnung
- 25: Axialrichtung
- 26: Neigung
- 27: Schaufelprofil
- 28: Kopplungsbereich
- 29: Koppelglied
- 30: erste Haltekontur
- 31: zweite Haltekontur
- 32: Kühlkanalstruktur von 10
- 33: Austrittsöffnung
- 34: Kühlkanalstruktur von 5, 7
- 35: Dichtungsstruktur
- 36: Befestigung

## Patentansprüche

1. Strömungsmaschine, insbesondere Turbine oder Kompressor,
- mit einem Rotor (2), der zumindest eine Laufschaufelreihe (4) mit mehreren Laufschaufeln (5) aufweist,
- mit einem Stator (3), der zumindest eine Leitschaufelreihe (6) mit mehreren Leitschaufeln (7) aufweist,
- wobei wenigstens bei einer der Schaufelreihen (4, 6) alle Schaufeln (5, 7) jeweils eine Deckplatte (10) aufweisen,
**dadurch gekennzeichnet,**
- **dass** die Deckplatten (10) bezüglich der jeweiligen Schaufel (5, 7) separate Bauteile sind und an die jeweilige Schaufel (5, 7) angebaut sind,
- **dass** in Umfangsrichtung (9) benachbarte Deckplatten (10) miteinander zur Übertragung von Zugkräften in Umfangsrichtung (9) gekoppelt sind.

2. Strömungsmaschine nach Anspruch 1,
**dadurch gekennzeichnet,**
- **dass** die jeweilige Deckplatte (10) an der zugehörigen Schaufel (5, 7) so angebaut ist, dass sie bezüglich der jeweiligen Schaufel (5, 7) radial beweglich ist, und/oder
- **dass** die jeweilige Deckplatte (10) an der zugehörigen Schaufel (5, 7) so angebaut ist, dass sie bezüglich der jeweiligen Schaufel (5, 7) axial und/oder in Umfangsrichtung (9) fixiert ist, und/oder
- **dass** die jeweilige Deckplatte (10) an der zugehörigen Schaufel (5, 7) zerstörungsfrei lösbar angebaut ist.

3. Strömungsmaschine nach Anspruch 1 oder 2,
**dadurch gekennzeichnet,**
**dass** benachbarte Deckplatten (10) im Bereich (27) ihrer gegenseitigen Kopplung in Umfangsrichtung (9) formschlüssig oder kraftschlüssig miteinander in Eingriff stehen oder aneinander befestigt sind.

4. Strömungsmaschine nach einem der Ansprüche 1 bis 3,
**dadurch gekennzeichnet,**
- **dass** jede Deckplatte (10) an ihren umfangsmäßigen Endbereichen einenends eine erste Haltekontur (30) und anderenends eine zweite Haltekontur (31) aufweist,
- **dass** im montierten Zustand die erste Haltekontur (30) jeder Deckplatte (10) mit der zweiten Haltekontur (31) der jeweils benachbarten Deckplatte (10) zur Übertragung von Zugkräften, insbesondere formschlüssig oder kraftschlüssig, in Eingriff steht.

5. Strömungsmaschine nach einem der Ansprüche 1 bis 4,
**dadurch gekennzeichnet,**
**dass** die jeweilige Deckplatte (10) an der zugehörigen Schaufel (5, 7) mit einer Sicherungseinrichtung (19) axial und/oder in Umfangsrichtung (9) gegen Relativverstellung gesichert ist.

6. Strömungsmaschine nach Anspruch 5,
**dadurch gekennzeichnet,**
- **dass** die jeweilige Sicherungseinrichtung (19) wenigstens ein Sicherungsglied (20) aufweist, das radial beweglich an der jeweiligen Schaufel (5, 7) angeordnet ist und das zumindest im Betrieb der Strömungsmaschine (1) in eine an der Deckplatte (10) ausgebildete Sicherungsöffnung (22) radial eindringt, und/oder
- **dass** das Sicherungsglied (19) mittels einer Sicherungsfeder (23) zum Eindringen in die Sicherungsöffnung (22) vorgespannt ist, und/oder
- **dass** das Sicherungsglied (20) als Bolzen ausgestaltet ist, und/oder
- **dass** die Deckplatte (10) für jedes Sicherungsglied (20) wenigstens eine Entsicherungsöffnung (24) enthält, durch die hindurch das Sicherungsglied (20) mittels eines geeigneten Werkzeugs aus der Sicherungsöffnung (22) heraus in die zugehörige Schaufel (5, 7) antreibbar ist.

7. Strömungsmaschine nach einem der Ansprüche 1 bis 6,
**dadurch gekennzeichnet,**
**dass** die jeweilige Deckplatte (10) Kühlkanalstrukturen (32) zum Kühlen der Deckplatte (10) im Betrieb der Strömungsmaschine (1) enthält, die im montierten Zustand der Deckplatte (10) mit Kühlkanalstrukturen (34) der zugehörigen Schaufel (5, 7) kommunizierend verbunden sind.

8. Strömungsmaschine nach einem der Ansprüche 1 bis 7,
**dadurch gekennzeichnet,**
**dass** die jeweilige Deckplatte (10) an ihrer von der zugehörigen Schaufel (5, 7) abgewandten Seite eine Dichtungsstruktur (35) zur Axialdichtung der Schaufelreihe (4, 6) im Betrieb der Strömungsmaschine (1) aufweist.

9. Deckplatte zum Anbauen an eine Schaufel (5, 7) einer Schaufelreihe (4, 6) einer Strömungsmaschine (1), insbesondere Turbine oder Kompressor, die mit einem Rotor (2), der zumindest eine Laufschaufelreihe (4) aus mehreren Laufschaufeln (5) aufweist, sowie mit einem Stator (3), der zumindest eine Leitschaufelreihe (6) aus mehreren Leitschaufeln (7) aufweist, versehen ist, wobei die Deckplatte (10) im montierten Zustand mit benachbarten Deckplatten (10) zur Übertragung von Zugkräften in Umfangsrichtung (9) gekoppelt ist.

10. Deckplatte nach Anspruch 9,
**gekennzeichnet durch** die kennzeichnenden Merkmale wenigstens eines der Ansprüche 1 bis 8.
